(19) Europäisches Patentamt

European Patent Office

Office européen des brevets

(11) **EP 1 225 370 A2**

(12) **EUROPEAN PATENT APPLICATION**

(43) Date of publication:
**24.07.2002 Bulletin 2002/30**

(51) Int Cl.⁷: **F16H 3/72**

(21) Application number: **02001279.5**

(22) Date of filing: **17.01.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **17.01.2001 JP 2001008839**

(71) Applicant: **UNISIA JECS CORPORATION**
**Atsugi-shi, Kanagawa-ken 243-8510 (JP)**

(72) Inventor: **Hamai, Kyugo,**
**c/o Unisia Jecs Corporation**
**Atsugi-shi, Kanagawa 243-8510 (JP)**

(74) Representative: **Grünecker, Kinkeldey,**
**Stockmair & Schwanhäusser Anwaltssozietät**
**Maximilianstrasse 58**
**80538 München (DE)**

(54) **Transmission unit**

(57) A transmission unit (MGU) is installed between an engine (EG) and an automatic transmission (TM) of an automotive vehicle. The transmission unit is comprised of a planetary gear set (3) comprising a sun gear (31), a carrier (32) and a ring gear (33). A first clutch (A-CL) is installed between the carrier and the drive shaft. A second clutch (B-CL) is installed between the carrier and the output shaft. A third clutch (C-CL) is installed between the sun gear and the drive shaft. Further, a brake motor (10) is provided so as to be capable of fixing and unfixing the ring gear. Therefore, vehicle starting, creep running and hill-hold of the vehicle are smoothly executed by this transmission unit.

**FIG.1**

**Description**

BACKGROUND OF THE INVENTION

The present invention relates to a transmission unit suitable for an automotive power transmission provided between an internal combustion engine and an automatic transmission.

Generally, an automotive vehicle equipped with an automatic transmission employs a torque converter between an internal combustion engine and the automatic transmission. Such a torque converter is exemplified by a Japanese Technical Book titled as an automotive engineering (published by Kabushiki Kaisha Sankaido on November 20, 1980).

As another transmission unit, a clutch is well known. Such a clutch is of a dry-type single plate clutch and is employed in an automatic clutch unit which automatically engages or disengages the clutch according to its necessity in view of a demand for operation easiness.

SUMMARY OF THE INVENTION

However, the torque converter is required to further improve a power-transmission efficiency and a fuel consumption which are affected by a power transmission employing fluid. On the other hand, although the clutch type transmission unit preferably ensures the power transmission efficiency, it is difficult for the clutch type transmission system to perform a low-speed and high-torque transmission.

It is therefore an object of the present invention to provide a transmission unit which performs a high efficiency of power transmission and is capable of outputting a low-speed and high-torque power.

An aspect of the present invention resides in a transmission unit which comprises a planetary gear set, a first clutch a second clutch a third clutch and a restraining device. The planetary gear set is installed between a drive shaft of a power source and an output shaft. The planetary gear set comprises a sun gear, a carrier and a ring gear. The first clutch is installed between the carrier and the drive shaft. The second clutch is installed between the carrier and the output shaft. The third clutch is installed between the sun gear and the drive shaft. The restraining device fixes and unfixes the ring gear.

Another aspect of the present invention resides in a transmission unit which is coupled to a drive shaft of an internal combustion engine and an input shaft of automatic transmission. The transmission unit comprises a vehicle driving condition detector unit, a planetary gear set, a first clutch, a second clutch, a third clutch, a ring-gear restraining device, and a controller. The vehicle driving condition detector unit detects a driving condition of the vehicle. The planetary gear set is installed between the drive shaft and the input shaft and comprises a sun gear, a carrier and a ring gear. The first clutch is installed between the carrier and the drive shaft. The second clutch is installed between the carrier and the output shaft. The third clutch is installed between the sun gear and the drive shaft. The ring-gear restraining device fixes and unfixes the ring gear. The controller is coupled to the vehicle driving condition detector unit, the first clutch, the second clutch, the third clutch and the ring-gear restraining device. The controller controls operation states of the first clutch, the second clutch, the third clutch and the ring-gear restraining device, respectively, according to the vehicle driving condition.

The other objects and features of this invention will become understood from the following description with reference to the accompanying drawings.

BRIEF DESCRIPTION OF THE DRAWINGS

Fig. 1 is a schematic diagram showing a transmission unit of a first embodiment according to the present invention.
Fig. 2 is an explanatory view showing a power transmission unit of an automotive vehicle to which the first embodiment is employed.
Fig. 3 is a cross sectional view showing an essential part of the first embodiment.
Fig. 4 is a flowchart showing a control procedure and a part of the structure of the first embodiment.
Fig. 5 is a shift diagram employed in the first embodiment.
Fig. 6 is a view for explaining the operation of the first embodiment.
Fig. 7 is a schematic diagram showing an essential part of a second embodiment.
Fig. 8 is a schematic diagram showing an essential part of a third embodiment.
Fig. 9 is a cross sectional view showing the third embodiment.

DETAILED DESCRIPTION OF THE INVENTION

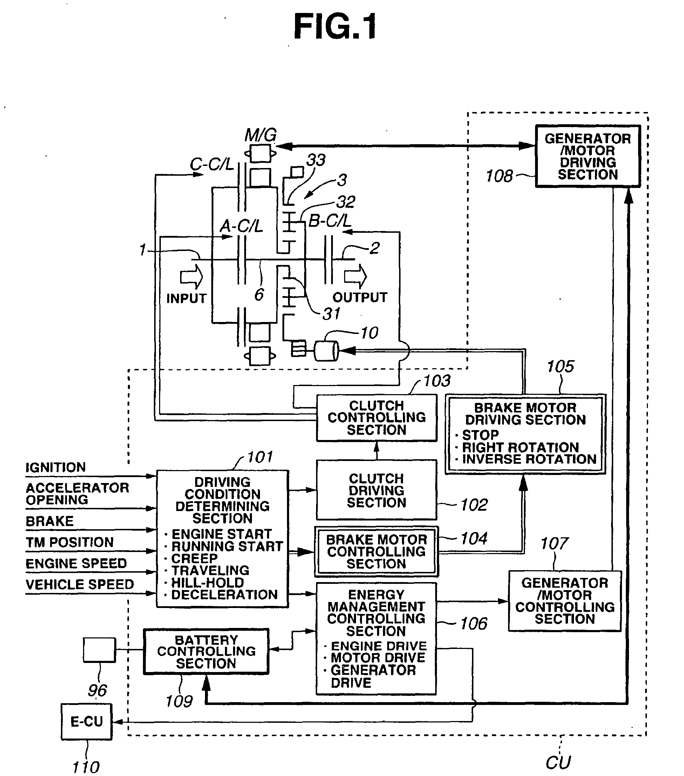

Referring to Figs. 1 to 6, there is shown a first embodiment of a transmission unit MGU according to the present invention.

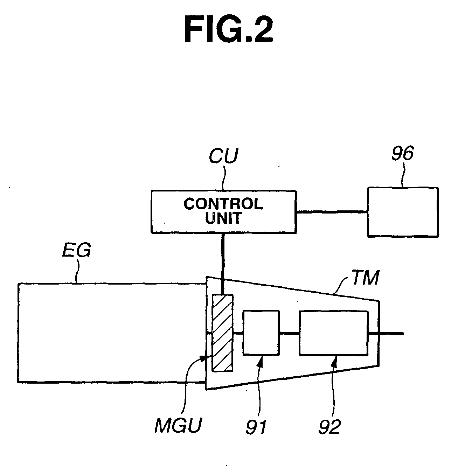

As shown in Fig. 2, transmission unit MGU is provided between an internal combustion engine EG and a forward/backward changeover section 91 of an automatic transmission TM. In other wards, transmission unit MGU is disposed at a position of a torque converter in a common power transmission unit including the torque converter and an automatic transmission. Driving force outputted from engine EG is transferred through transmission unit MGU to automatic transmission TM constituted by forward/backward changeover section 91 and a shifting section 92. A manual transmission of a continuously variable transmission (CVT) may be employed instead of automatic transmission TM.

As shown in Fig. 1, transmission unit MGU comprises an input shaft 1 coupled to an engine output shaft of engine EG, an output shaft 2 coupled to an input shaft of transmission TM, and a center shaft 6 provided between output shaft 2 and input shaft 1. Further, transmission unit MGU comprises a planetary gear set 3 provided around center shaft 6, a generator/motor MG coupled to planetary gear set 3, a first clutch A-C/L, a second clutch B-C/L, a third clutch C-C/L and a brake motor 10.

Planetary gear set 3 is disposed around center shaft 6 and transmits torque generated by engine EG to automatic transmission TM. Planetary gear set 3 basically comprises a sun gear 31, a carrier 32 which includes a plurality of planet pinions (no numeral) and is meshed with sun gear 31, and a ring gear 33 which is meshed with carrier 32 through pinions. Generator/motor MG is coupled to planetary gear set 3 and transmits electric power between generator/motor MG and rotational elements connected with planetary gear set 3. First clutch A-C/L is of a wet and multi-plate type clutch and selectively executes engagement and disengagement of input shaft 1 relative to center shaft 6 and carrier 32 integral with center shaft 6. Second clutch B-C/L is also of a wet and multi-plate type clutch and selectively executes engagement and disengagement between center shaft 6 (carrier 32) and output shaft 2. Third clutch C-C/L selectively executes engagement and disengagement between input shaft 1 and a sun gear 31 of planetary gear set 3. Brake motor 10 selectively executes fixation, right rotation, and inverse rotation of ring gear 33 of planetary gear set 3.

A control unit CU controls first, second and third clutches A-C/L, B-C/L and C-C/L, generator/motor MG and brake motor 10. Detailed explanation of such a control will be discussed later.

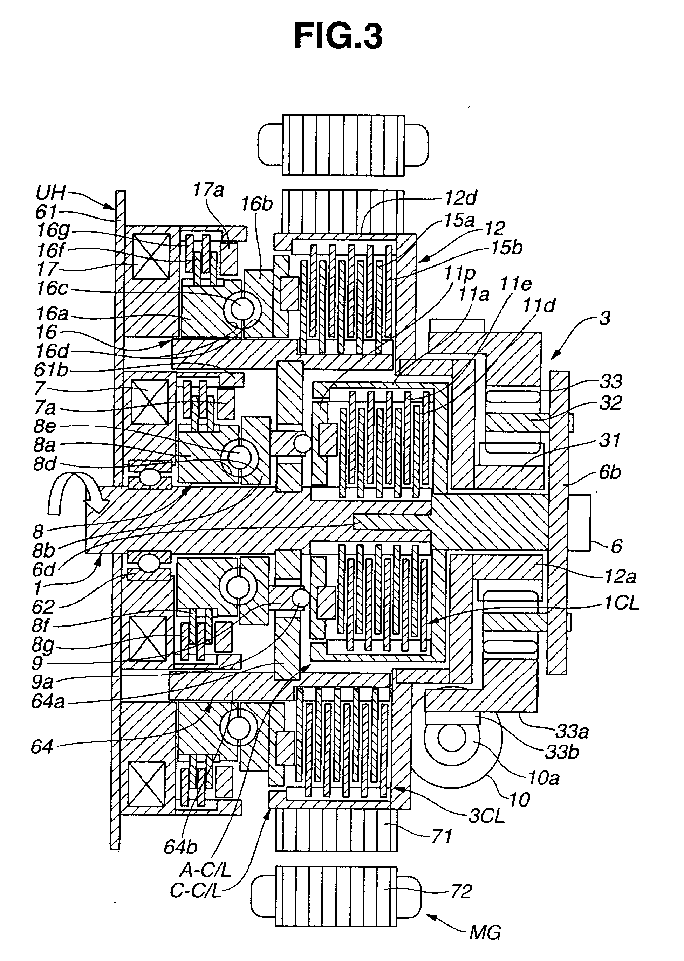

First, a detailed construction of transmission unit MGU will be discussed with reference to Fig. 3.

Second clutch B-C/L is an already-existing clutch employed in forward/rearward changeover section 91 or shifting section 92. Therefore, an actual assembly of transmission unit MGU includes center shaft 6 as shown in Fig. 3.

As shown in Fig. 3, input shaft 1 and center shaft 6 are coaxially arranged. A small diameter shaft 6d is provided at an end of center shaft 6 and is rotatably installed at an end of input shaft 1. Input shaft 1 is rotatably supported with a housing UH through a bearing 62. Another end portion (not shown) of input shaft 1 is also rotatably supported with a bearing (not shown). It is preferable that housing UH is integrally connected with one of engine EG and automatic transmission TM. Further, it is preferable that a vibration insulating means for absorbing bending vibrations and torsional vibrations of engine EG is provided between the ' engine output shaft and input shaft 1.

Planetary gear set 3 is provided around center shaft 6. A cylindrical portion 12a provided on an inner side of a rotation member 12 is installed around center shaft 6 so as to be rotatable relative to center shaft 6. Sun gear 31 of planetary gear set 3 is integrally installed at an outer periphery of cylindrical portion 12a. A disc 6b is integrally connected to center shaft 6, and is connected to carrier 32 of planetary gear set 3 so as to integrally rotate with carrier 32. A cylindrical portion 33a is integrally connected to an outer periphery of ring gear 33, and a worm wheel gear 33b is formed on an outer periphery of ring gear 33.

A worm gear 10a rotated by brake motor 10 is engaged with worm wheel gear 33b. Ring gear 33 is rotated in the right direction and the inverse direction according to the right directional rotation and the inverse directional rotation of brake motor. When a lead angle λ of worm gear 10a ranges from 10° to 20°, worm gear 10a is stopped relative to worm wheel gear 33b, and when brake motor 10 is stopped, ring gear 33 is fixed. If it is desired such that the system should be arranged to rotate ring gear 33 under a stopping condition of brake motor 10, worm gear 10a may be replaced with a pinion gear.

Subsequently, first clutch A-C/L disposed between input shaft 1 and center shaft 6 will be discussed.

First clutch A-C/L comprises a first multi-plate clutch 1CL and a pressing member 11b. First multi-plate clutch 1CL is constituted by alternately arranging inner clutch plates 11d engaged with a spline formed on an outer periphery of input shaft 1 and outer clutch plates 11e engaged with a spline formed on an inner surface of clutch case 11a. When inner and outer clutch plates 11d and 11e are pressed by pressing member 11p in the right hand direction in Fig. 3, rotational force is transmitted from input shaft 1 to carrier 32.

Such a pressing operation of pressing member 11 is executed by a first electromagnetic solenoid 7 and a first control cam 8. First control cam 8 generates a pressing force of pressing member 11 according to the input torque. First control cam 8 comprises a first ring 8a, a second ring 8b and a plurality of balls 8e. First ring 8a is floatingly supported with input shaft 1 through oil so as to be able to be dragged to the rotation of input shaft 1, and is limited in an axial movement along an axis of input shaft 1. Second ring 8b is also floatingly supported by input shaft 1 through oil, and is movable in the axial direction along the axis of input shaft 1. Both first and second rings 8a and 8b have a plurality of cam grooves 8d and 8d of a cup shape so as to be opposite with each other. Each of balls 8e is disposed in each couple of cam grooves 8d and 8d. Balls 8e may be replaced with column rollers.

Second ring 8b is biased toward first ring 8a by means of a biasing means (not shown) such as a return spring of a plate shape which is disposed between a disc plate 64a and second ring 8b.

When a relative rotation torque is generated between first ring 8a and second ring 8b, balls 8e ride over inclined surfaces of cam grooves 8d. As a result of this riding over of balls 8e separates second ring 8b from first ring 8a along the axial direction. Torque generated between first and second rings 8a and 8b is amplified according to a magnification corresponding to the inclined surface of cam groove 8d and is converted to the pressing force along the axial direction.

A plurality of operation rods 9 project from second ring 8b toward pressing member 11p. When second ring 8b is axially moved toward pressing member 11p, operation rods 9 push pressing members 11p. Operation rods 9 penetrate disc plate 64a, and ball 9a is provided at a tip end of each operation rod 9 as shown in Fig. 3. An outer peripheral surface of first ring 8a is machined into spline, and an inner peripheral surface of a cylinder 61b integral with disc 61 is also machined into spline. First mini-clutch plates 8f are engaged with the spline of first ring 8a, and second mini clutch plates 8g are engaged with the spline of cylinder 61b. First and second mini-clutch plates 8f and 8g are alternately arranged.

An armature 7a is disposed adjacent to the first mini-clutch plate 8f at a rightmost end and supported by cylinder 61b so as to be movable along the axial direction when first electromagnetic solenoid 7 is energized.

When armature 7a is attracted to first electromagnetic solenoid 7 energized, first and second mini-clutch plates 8f and 8g are pressed by armature 7a, and the rotations thereof are restricted. Due to this rotational restriction of first and second mini-clutch plates 8f and 8g, a rotational torque is generated between first and second rings 8a and 8b. Therefore, first control cam 8 performs the above-mentioned cam operation; and pressing member 11p is pressed by second ring 8b through operation rods 9 along the axial direction. As a result, inner and outer clutch plates 11d and 11e are engaged so that power transmission between input shaft 1 and carrier 32 is executed.

Subsequently, third clutch C-C/L will be discussed in detail. Third clutch C-C/L is disposed coaxial with first clutch A-C/L and at an outside portion of first clutch A-C/L. Further, third clutch C-C/L is disposed between sun gear 31 and input shaft 1. More specifically, a rotation member 64 comprises a disc shaped plate 6 and a cylinder 64b connected to an outer peripheral end of plate 64a. Rotation member 64 is integrally connected with input shaft 1. An outer periphery of cylinder 64b of rotation member 64 is machined into spline.

On the other hand, an inner periphery of outer cylinder portion 12d, which is provided at an outer most portion of rotation member 12 integral with sun gear 31, is also machined into spline.

Inner clutch plates 15a are engaged with the spline formed at the outer periphery of cylinder 64b, and outer clutch plate 15b are engaged with the spline formed at the inner periphery of outer cylinder portion 12d. Further, inner and outer clutch plates 15a and 15b are alternately arranged so as to be movable along the axial direction.

Third multi-plate clutch 3CL comprises these clutch plates 15a and 15b which are installed in the splines, respectively. Third multi-plate clutch 3CL is engaged by operating a third control cam 15 and third electromagnetic solenoid 17. Third control cam 15 comprises a first ring 16a, a second ring 16b, a plurality of balls 16c, cam grooves 16d, and first and second mini-clutch plates 16f and 16g, as is similar to first control cam 8. By generating attracting force according to the energization of third electromagnetic solenoid 17, an armature 17a is moved along the axial direction, and therefore first and second mini-clutch plates 16f and 16g are engaged. By this engagement, third control cam 16 starts to operate. More specifically, third control cam generates an operation force along the axial direction, and therefore second ring 16b pushes inner clutch plate 15a so as to engage third clutch C-C/L (third multi-plate clutch 3CL).

Generator/motor MG comprises a rotor 71 and a stator 72. Rotor 71 is installed around outer cylinder member 12d of rotation member 12. Stator 72 is installed on an inner periphery of a not-shown part of housing UH so as to be opposite to an outer periphery of rotor 71. Therefore, when electric power is supplied to stator 72, rotor 71 is rotated, and when rotor 71 is rotated, stator 72 generates induction current to generate electricity.

Although detailed explanation of second electromagnetic clutch B-C/L is omitted herein, second electromagnetic clutch B-C/L is basically constituted by a wet and multi-plate type clutch as is similar to third electromagnetic clutch C-C/L, and the engagement thereof is executed by operating second control cam (not shown) and second electromagnet solenoid (not shown).

Subsequently, control unit CU will be discussed with reference to Fig. 1.

As shown in Fig. 1, control unit CU comprises a driving condition determining section 101, a clutch controlling section 102, a clutch driving section 103, a brake motor controlling section 104, a brake motor driving section 105, an energy management controlling section 106, a generator/motor controlling section 107, a generator/motor driving section 108, and a battery controlling section 109.

Driving condition determining section 101 of control unit CU is coupled to an ignition switch (not shown) and various sensors (not shown), and receives driving condition indicative information including an ON/OFF state of engine EG, an accelerator opening, a brake operating condition, a shift position of automatic transmission TM and a vehicle speed. Further, driving condition determining section 101 receives an engine speed indicative signal from an engine control unit 110. On the basis of the obtained information, driving condition determining section 101 determines whether the vehicle is put in an engine start condition, a running start condition, a creep condition, a vehicle traveling condition, a hill-hold condition, or a vehicle decelerating condition. The creep condition is a condition that the vehicle slowly moves under an accelerator-pedal released condition. The hill-hold condition is a condition that the vehicle is stopped on an upslope while the braking is not executed and the accelerator pedal is released.

Clutch control section 102 of control unit CU determines a changeover between engagement and disengagement of each of first, second and third' clutches A-C/L, B-C/L and C-C/L, according to the determined driving condition.

Clutch driving section 103 of control unit CU outputs a drive signal for operating by a predetermined quantity to each electromagnetic solenoid 7, 17 of each of first, second and third clutches A-C/L, B-C/L and C-C/L on the basis of the determination executed by clutch control section 102.

Brake motor control section 104 of control unit CU determines whether brake motor 10 is put in a stopped state, a right rotation state or a reverse rotation state according to the determined driving condition.

Brake motor driving section 105 of control unit CU outputs a signal for driving brake motor 10 according to the rotation state determined by brake motor control section 104.

Energy management controlling section 106 of control CU determines the operating condition of generator/ motor MG according to a charged condition of a battery 96 electrically connected to motor/generator MG through control unit CU. More specifically, energy management controlling section 106 determines whether generator/motor MG is used as a starter motor for starting engine EG, an electric motor for generating driving force, or a generator for generating electricity.

Generator/motor controlling section 107 of control unit CU determines a quantity of operation of generator/ motor MG as to the purpose determined by energy management controlling section 106. Further, generator/motor driving section 108 drives generator/motor MG based on the operation quantity determined at generator/motor controlling section 107. This generator/motor driving section 108 normally corresponds to an inverter.

Battery controlling section 109 of control unit CU calculates the charged quantity of battery 96 and executes a charging of battery 96 by supplying the generated electric power to battery 96.

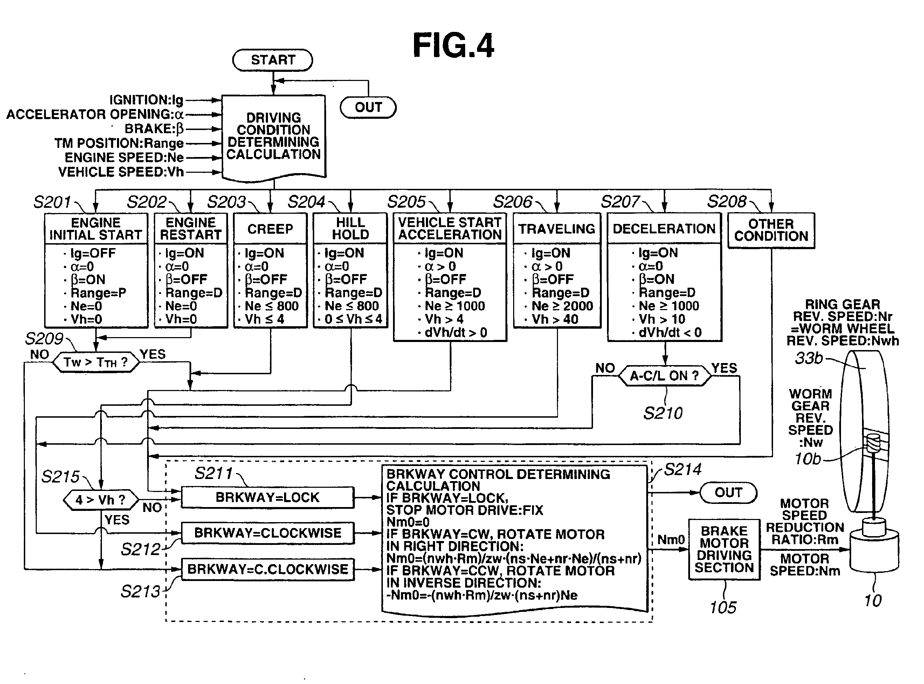

Subsequently, the manner of operation of transmission unit MGU will be discussed with reference to a flowchart of Fig. 4. This flowchart shows the operation of brake motor 10.

[Engine Initial Starting Condition]

At a period of an engine initial start where engine EG is started from an ignition OFF state (engine-stopped and vehicle-parking condition), driving condition determining section 101 of control unit CU obtains the driving condition indicative information that the ignition switch is in OFF state, the accelerator opening is zero ($\alpha=0$), the brake is operating (ON), the shift position is set at a parking range (P), engine speed is zero (Ne=0), and the vehicle speed is zero (Vh=0). Therefore, driving condition determining section 101 determines that the vehicle is put in the initial start condition from the obtained information. When the ignition switch is turned ON from this engine initial start condition, control unit CU executes a torque increasing control.

More specifically, first clutch A-C/L is engaged, and second and third clutches B-C/L and C-C/L are disengaged. Further, generator/motor MG is used as an electric motor.

Further, control unit CU determines at step S209 whether an engine water temperature Tw is higher than a predetermined temperature $T_{TH}$ such as 20°C or not. When the determination at step S209 is affirmative (Tw > $T_{TH}$), that is, when engine EG is in a warm-up condition, the routine of Fig. 4 proceeds from step S209 to step S211 wherein control unit CU stops brake motor 10 to fix ring gear 33. This lock of brake motor 10 corresponds to the start control. When the determination at step S209 is negative (Tw < $T_{TH}$), that is, when engine EG is still cold and is not in the warm-up condition, the routine of Fig. 4 proceeds to step S214 wherein control unit CU rotates brake motor 10 inversely. More specifically, control unit CU calculates a motor inverse revolution speed -Nm0 for brake motor 10 from the following equation (1).

$$-Nm0 = -(nwh \cdot Rm) / zw \cdot (ns/nr) \cdot Ne \qquad (1)$$

wherein nwh is the number of teeth of worm wheel gear 33b, Rm is the motor speed reduction ratio, zw is the number of threads of worm gear 10a, ns is the number of teeth of sun gear 31, and nr is the number of teeth of ring gear 33.

Control unit CU rotates brake motor 10 inversely by setting the revolution speed of brake motor at the calculated inverse revolution speed - Nm0.

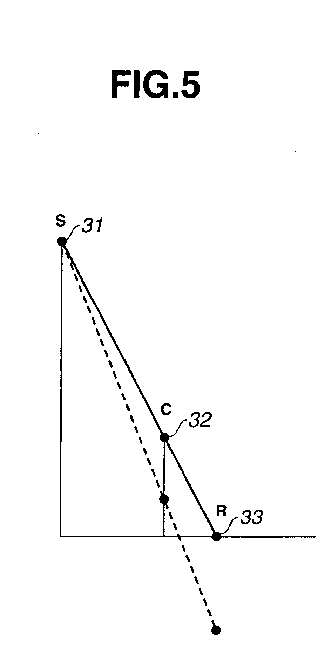

Accordingly, the driving force generated by generator/motor MG is inputted to sun gear 31 through rotation member 12, and is outputted further through carrier 32, disc 6b, center shaft 6 and first clutch A-C/L to input shaft 1. Thus, the driving force is transmitted to engine EG for starting engine EG. Under this condition, when ring gear 33 is fixed, the revolution speed of the driving force is reduced by carrier 32 as shown by a shift diagram shown in Fig. 5, and therefore, the torque outputted from generator/motor MG is amplified and applied to engine EG. In this ring-gear fixed condition, the speed reduction ratio Ns/Nc of this transmission unit MGU is represented by the following equation (2).

$$Ns/Nc = (ns+nr)/ns \qquad (2)$$

wherein ns is the number of teeth of sun gear 33, and nr is the number of teeth of ring gear 33. In this embodiment according to the present invention, Ns/Nc is set at 1/3 (Ns/Nc=1/3).

On the other hand, when ring gear 33 is rotated inversely by inversely rotating brake motor 10, the speed reduction ratio is set at a further large, value, as shown in the shift diagram of Fig. 5.

If a torque needed for starting engine EG is set at a predetermined constant value, it is possible to decrease the drive torque of generator/motor MG by inversely rotating ring gear 33. That is, this inverse rotation of ring gear 33 enables generator/motor to be further decreased in size. Specifically, in this present embodiment, it is intended to produce transmission unit MGU as small as possible since it is necessary to set power transmission unit MGU in a limited space where a torque converter for an automatic transmission has been provided. Since the present embodiment according to the present invention is arranged such that generator/motor MG is disposed around rotation member 12, it is preferable in decreasing an axial dimension and is not preferable in decreasing a diametrical dimension.

Accordingly, decreasing the necessary drive torque of generator/motor MG is very effective in decreasing the diametrical dimension of power transmission of the present invention.

[Engine Restart Condition]

An engine restart is a start control of engine EG which control is executed after an idle stop control. The idle stop control is a control for automatically stopping the operation of engine EG when the vehicle is temporally stopped in response to a traffic signal or other traffic situation during vehicle traveling.

During this engine restart period, driving condition determining section 101 of control unit CU obtains the driving condition indicative information that the ignition switch is in ON state, the accelerator opening is zero ($\alpha$=0), the brake is not operating (OFF), the shift position is set at a drive range (D), engine speed Ne is zero (Ne=0), and the vehicle speed is zero (Vh=0). Therefore, driving condition determining section 101 determines that the vehicle is put in the engine restart condition from the obtained information. When control unit CU detects a vehicle starting intent of a driver from the increase of the accelerator opening $\alpha$, control unit CU executes the engine restart operation.

During this engine restart condition, as is similar to the operation for the engine initial start condition, first clutch A-C/L is engaged, and second and third clutches B-C/L and C-C/L are disengaged. Further, generator/motor MG is stopped or inversely rotated according to engine water temperature Tw.

[Creep Running Condition]

This creep condition is a condition that the vehicle slowly runs forward without depressing the accelerator pedal. Under this condition, driving condition determining section 101 of control unit CU obtains the driving condition indicative information that the ignition switch is in ON state, the accelerator opening is zero ($\alpha$=0), the brake is not operating (OFF), the shift position is set at a drive range (D), engine speed Ne is smaller than or equal to 800 rpm (Ne $\leq$ 800rpm), and the vehicle speed is smaller than or equal to 4km/h (Vh = 4km/h).

During this creep running condition, second and third clutches B-C/L and C-C/L are engaged, and first clutch A-C/L is disengaged. Further, generator/motor MG is inversely rotated according to engine water temperature Tw by the execution of step S211 of Fig. 4.

Accordingly, the driving force of engine EG is outputted to output shaft 2 from input shaft 1 through third clutch C-C/L, rotation member 12, sun gear 31, carrier 32 and second clutch B-C/L. During this operation, the driving force inputted to sun gear 31 is reduced in speed and is then outputted from carrier 32 as shown by the shift diagram of Fig. 5. Accordingly, the creep running is executed by a transmitted force having a slow speed and a high torque generated by this setting of planetary gear set 3. This arrangement of the power transmission according to the present invention enables the creep running by increasing the torque of the driving force without occurring a clutch slipping operation which generates some heating in a conventional system.

The routine of Fig. 3 may be modified such that the routine proceeds from step S203 to step S215 when the vehicle is executing this creep running. By this modified arrangement, it is determined whether vehicle speed Vh is smaller than 4km/h or not. When the determination at step S215 is affirmative (4km/h > Vh), the routine proceeds to step S211 wherein the torque increasing control, which is executed by inversely rotating ring gear 33, may be executed. By executing this inverse rotating operation of ring gear 33, the torque increasing function of the power transmission according to the present invention is further increased and becomes further preferable. When the determination at step S215 is negative (Vh ≥ 4km/h), the routine proceeds to step S213 wherein control unit CU executes the speed reduction control by fixing ring gear 33 so that the vehicle smoothly increases vehicle speed Vh from the creep running condition.

Additionally, since it is possible that planetary gear set 3 can provide a speed reduction ratio, it is possible to execute the creep running only by the driving force of generator/motor MG. That is, when battery 96 is sufficiently charged, it is possible to execute this creep running only by the driving force of generator/motor MG. Such a creep running by generator/motor MG improves a fuel consumption property of the vehicle. When the creep running is executed by operating generator/motor MG, only second clutch B-C/L is engaged, and first and third clutches A-C/L and C-C/L are disengaged so that the transmission unit MGU is disconnected from engine EG.

[Hill-Hold Condition]

The hill-hold condition is a condition that when the vehicle stops on an upslope, the vehicle maintains the stopping condition only by the driving torque of engine EG under a condition that the driver releases its foot from the brake pedal and does not depress the accelerator pedal.

Under this condition, driving condition determining section 101 of control unit CU obtains the driving condition indicative information that the ignition switch is in ON state, the accelerator opening is zero ($\alpha$=0), the brake is not operating (OFF), the shift position is set at a drive range (D), engine speed Ne is smaller than or equal to, 800 rpm (Ne ≤ 800rpm), and the vehicle speed Vh ranges within 0 to 4km/h (0 ≤ Vh ≤ 4km/h).

During this hill-hold condition, control unit CU executes operations that second and third clutches B-C/L and C-C/L are engaged, and first clutch A-C/L is disengaged, as is similar to the creep running condition.

Regarding the operation of brake motor 10, the routine of Fig. 3 proceeds from step S204 to step S215 where control unit CU determines whether vehicle speed Vh is smaller than 4km/h or not. Since vehicle speed Vh is basically smaller than 4km/h under this hill-hold condition, the routine proceeds to step S213 wherein brake motor 10 is inversely rotated (counter clockwise direction).

During this high-hold condition, revolution speed Ns of carrier 32 is kept at zero (Ns = 0), and the inverse rotation of brake motor 10 is controlled so that inverse revolution speed -Nr of ring gear 33 satisfies the following equation (3).

$$-Nr = ns \bullet Ns / nr \qquad (3)$$

Under this condition, torque ratio Ts/Tc is set at infinite, though it depends on the maximum value of the driving force.

Accordingly, it is possible to decrease the revolution speed of carrier 32 as shown in Fig. 5. Further, by controlling the inverse revolution speed of ring gear 33, the revolution speed of carrier 32 can be kept at zero, and therefore it becomes possible to put the vehicle in the stopped condition on an upslope.

Further, when vehicle speed Vh becomes greater than or equal to 4km/h, the routine in Fig. 4 proceeds to step S211 wherein brake motor 10 is stopped to fix ring gear 33. By this fixing of ring gear 33, the speed reduction control is executed, and therefore the vehicle smoothly starts to run , from the hill-hold condition.

Furthermore, when the hill-hold control is executed, generator/motor MG may be used as a generator to convert the input torque into electric energy as the need arises. By this operation, a part of output energy of engine EG is stored in battery 96. Further, generator/motor MG may be used as an electric motor in order to further increase the output power by adding the output power of generator/motor MG to the output of engine EG, so that the revolution speed of sun gear 31 is kept constant even if the output of engine EG is varied.

[Vehicle Start and Acceleration Condition]

When the vehicle starts to run and to be accelerated after engine EG is started, driving condition determining section 101 of control unit CU obtains the driving condition indicative information that the ignition switch is in ON state, the accelerator opening is greater than 0 ($\alpha$>0), the brake is not operating (OFF), the shift position'is set at a drive range (D), engine speed Ne is greater than or equal to 1000 rpm (Ne ≥ 1000rpm), the vehicle speed Vh is greater than 4km/h (Vh > 4km/h), and a rate dVh/dt of change of vehicle speed is greater than zero (dVh/dt > 0).

During this vehicle start and acceleration condition, control unit CU executes operations that second and third clutches B-C/L and C-C/L are engaged, and first clutch A-C/L is disengaged, in order to transmit the torque by decreasing the revolution speed, as is similar to the creep running condition. Further, ring gear 33 is fixed by stopping brake motor 10. Accordingly, the driving force of engine EG is increased in torque and decreased in speed, and is then transmitted to output shaft 2 so as to smoothly start and accelerate the vehicle.

When the vehicle is started, the routine in Fig. 4 is proceeds to step S215 so that the speed-reduction and torque-increase control is executed by inversely rotating ring gear 33 through the inverse rotation of brake motor 10 when vehicle speed Vh ranges from 0 to 4 km/h. Thereafter, ring gear 33 may be fixed. With this arrangement, it becomes possible to smoothly start the vehicle.

Additionally, since it is possible to obtain a desired speed reduction ratio only by planetary gear set 3, generator/motor MG may be used as an electric motor by engaging second clutch B-C/L during the vehicle starting. By this operation of generator/motor MG, the driving torque of generator/motor MG is inputted to sun gear 31, reduced in speed, and outputted through carrier 21 to output shaft 6. That is, it is possible that the power necessary for staring the vehicle is achieved only by the driving force of generator/motor MG. Therefore, if such a vehicle start operation by generator/motor MG is executed under the battery sufficiently charged condition, the fuel consumption property is improved.

[Constant High-Speed Traveling Condition]

When the vehicle travels at a constant high speed, driving condition determining section 101 of control unit CU obtains the driving condition indicative information that the ignition switch is in ON state, the accelerator opening is greater than 0 ($\alpha$>0), the brake is not operating (OFF), the shift position is set at a drive range (D), engine speed Ne is greater than or equal to 2000 rpm (Ne $\geq$ 2000rpm), and the vehicle speed Vh is greater than 40km/h (Vh > 40km/h).

During this high speed traveling condition, first and second clutches A-C/L and B-C/L are engaged, and third clutch C-C/L is disengaged. Further, brake motor 11 is rotated rightly (in clockwise direction) by executing the process of step S212.

In order to rotate brake motor 10 rightly (clockwise), the revolution speed Nm0 of brake motor 10 is set at a value represented by the following equation (4).

$$Nm0 = (nwh \cdot Rm)/zw \cdot (ns \cdot Ns0 + nr \cdot Nr)/(ns + nr) \tag{4}$$

wherein nwh is the number of teeth of worm wheel gear 33b, Rm is the motor speed-reduction ratio, zw is the number of threads of worm gear 10a, ns is the number of teeth of sun gear 31, Ns0 is the revolution speed of sun gear 31 which is equal to the revolution speed of carrier 32, nr is the number of teeth of ring gear, and Nr is the revolution speed of ring gear 33.

Accordingly, the driving force of engine EG is transmitted from input shaft 1 through first clutch A-C/L, center shaft 6, and second clutch B-c/L to output shaft 2 while keeping the rotation ratio at 1 : 1.

Even when ring gear 33 is fixed, the rotation ratio is kept at 1 : 1. However, if ring gear 33 is fixed, the revolution speed of sun gear 31 is increased due to the input from carrier 32. If the revolution speed of rotor 71 of generator/motor MG becomes too high, a generation efficiency of generator/motor MG is degraded. Therefore, the transmission unit MGU of the first mbodiment according to the present invention is arranged such that when the vehicle travels at a constant high speed greater than 40km/h, the revolution speed Ns of sun gear 31 is adjusted with the revolution speed of carrier 31 by rightly (clockwise) rotating ring gear 33. With this arrangement, the generation efficiency of generator/motor MG is improved. On the other hand, when the vehicle travels at a constant speed smaller than 40km/h, brake motor 10 is stopped, and first and second clutches A-C/L and B-C/L are engaged. This traveling condition at a not-high speed traveling belongs in the condition of step S208.

[Deceleration condition]

When the vehicle is decelerated, the regenerative braking is basically executed in this transmission unit MGU according to the present invention. In this first embodiment according to the present invention, it is determined whether the engine brake is activated or not, on the basis of vehicle speed Vh. In this first embodiment, when vehicle speed Vh is a medium speed generally ranging from 40 to 60 km/h, the engine brake is not activated. When vehicle speed Vh is a high speed higher than 60 km/h, the engine brake is activated in order to ensure a further large braking force. When the engine brake is not activated, generator/motor MG is used as a generator so as to generate the braking force and to regenerate electric power.

When the decelerating and regenerating control without activating the engine brake is executed, the operation of engine EG is stopped. Further, second clutch B-C/L is engaged, and first and third clutches A-C/L and C-C/L. Therefore, the determination at step S210 becomes negative, and the routine of Fig. 4 proceeds to step S211 wherein brake motor 19 is fixed. In this situation, the torque inputted from driving wheels to output shaft 2 is increased by carrier 32 and is outputted to sun gear 31. Further, the revolution speeds of rotation member 12 and rotor 71 are increased to three times, and generator/motor MG is charged thereby. Therefore, it becomes possible to obtain a high battery charging efficiency by this three-times amplification of the revolution speed of generator/motor MG relative to the revolution speed of output shaft 2.

On the other hand, when the decelerating and regenerating control is executed with the activation of the engine brake under the constant high-speed traveling, the first and second clutches A-C/L and B-C/L are engaged while engine EG is driven and connected to transmission unit MGU. With this arrangement, a part of torque inputted from driving wheels to output shaft 2 is cancelled by the engine brake of engine EG. Further, the routine of Fig. 4 proceeds from step S210 to step S212 wherein brake motor 10 is rotated rightly (clockwise), and therefore ring gear 33 is rotated rightly. In this situation, the rotation of brake motor 10 is controlled such that sun gear 33 is rotated at a speed equal to that of the carrier 32. With this control, generator/motor MG effectively executes the regenerative operation.

[Compilation of Operations]

Referring to the equation corresponding to the revolution speed control of planetary gear set 3, the original equation as to the revolution speed Nr of ring gear 33 is expressed by the following equation (5).

$$Nr = \{(ns + nr)Nc - ns \cdot Ns\} / nr \qquad (5)$$

Case (1): When sun gear 33 is a driving side and when carrier 32 is a driven side, the revolution speed ratio between input and output revolution speeds is Ns/Nc.

Case (2): When carrier 32 is the driving side and when sun gear 33 is the driven side, the revolution speed ratio between input and output revolution speeds is Nc/Ns.

When ring gear 33 is fixed and when case (1), Ns/Nc = (ns+nr)/ns, and the torque ratio Ts/Tc = η • ns/(ns+nr).

When ring gear 33 is fixed and when case (2), Ns/Nc = ns/(ns+nr), and the torque ratio Ts/Tc = η • (ns+nr)/ns.

In these equations, the gear efficiency η is 0.96 (η=0.96).

Subsequently, when ring gear 33 is rotated at a speed equal to that of carrier 32 and when case (1), Nr = Ns = Nc, and the torque ratio Ts/Tc is 1 (Ts/Tc = η • Nc/Ns = 1).

When ring gear 33 is rotated at a speed equal to that of carrier 32 and when case (2), Nr = Nc, and the torque ratio Ts/Tc is η • Ns/Nc (Ts/Tc = η • Ns/Nc).

Further, when the revolution speed Nc of carrier 32 is controlled at zero (Nc=0) by inversely rotating ring gear 33, -Nr = ns • Ns/nr and the torque ratio Ts/Tc is infinite (Ts/Tc = ∞).

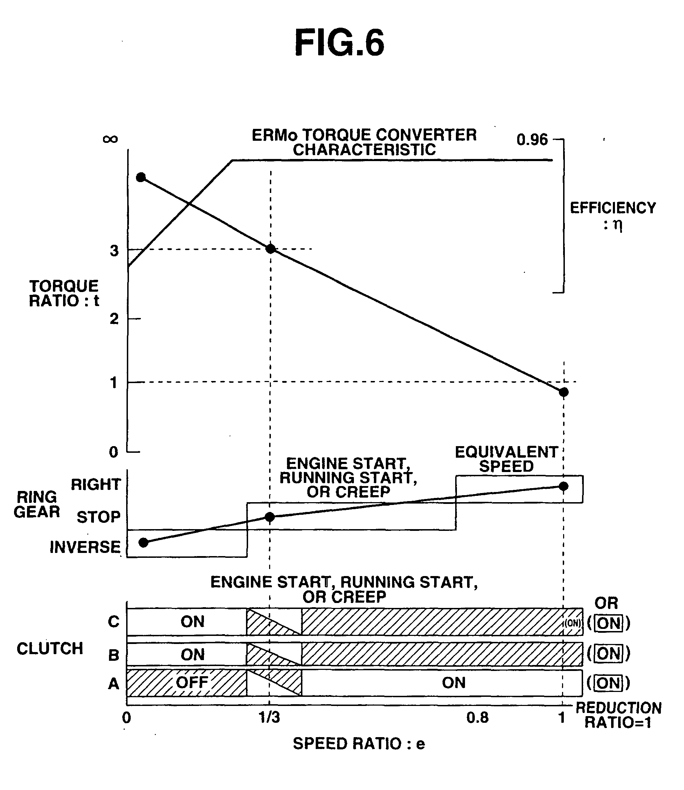

Fig. 6 shows the characteristic diagram which shows the compiled content of the above discussed operations.

As shown in a left hand side in Fig. 6, when the revolution speed of carrier 32 is set at zero by disengaging first clutch A-C/L (OFF), by engaging second and third clutches B-C/L and C-C/L (ON), and by inversely rotating ring gear 33 (motor brake 10), the torque ratio takes a value near infinite (∞).

Further, as shown in an intermediate portion in Fig. 6, when the speed ratio of carrier 32 is set at 1/3 by disengaging first clutch A-C/L, by engaging second and third clutches B-C/L and C-C/L and by stopping ring gear 33 (brake motor 10), the torque ratio takes 3.

Further, as shown in a right hand side in Fig. 6, when the speed ratio of carrier 32 is set at 1 by engaging first and second clutches A-C/L and B-C/L (ON), by disengaging third clutch C-C/L, and by rightly rotating ring gear 33 (brake motor 10), the torque ratio takes 1.

As explained above, the first embodiment of the transmission unit MGU according to the present invention is arranged to execute the torque transmission by operating planetary gear set 3, first to third clutches A-C/L, B-C/L and C-C/L and brake motor 10 without employing a torque converter. Therefore, no slip is generated during the torque transmission operation, and the torque transmission efficiency is superiorly executed.

Further, the transmission unit MGU executes a power transmission while the revolution speed of the driving force to be transmitted is varied according to the needs by planetary gear set 3, and first to third clutches A-C/L, B-C/L and C-C/L. Therefore, it is possible to output a low-speed and high-torque power without employing a heat-generating slipping clutch. Further, it becomes possible that generator/motor MG effectively operates.

Accordingly, with this arrangement of the first embodiment according to the present invention, the transmission unit MGU enables the vehicle starting or the creep running to be smoothly executed and the hill-hold to be certainly executed without generating heat at a clutch. Further, since it is possible to stop and to clockwise (rightly) and counterclockwise (inversely) rotate ring gear 3 by controlling brake motor 10 in the first embodiment, particularly to increase the torque ratio to an extremely large value during the inverse rotation of ring gear 33, it becomes possible to use generator/motor MG as a starter motor to execute the start of the vehicle, the creep running and the hill-hold thereby. Further, when ring gear 33 is rightly rotated, generator/motor MG can effectively execute the regenerative braking by increasing the revolution speed of sun gear 31.

Further, with the thus arranged first embodiment, it is possible to decrease the size of generator/motor MG by supplying a torque reduced in speed from generator/motor MG through planetary gear set 3 to engine EG. Since the first embodiment is arranged to provide generator/motor MG on the rotation member 12, it is possible to suppress an axial dimension of transmission unit MGU. Further since it is possible to amplify the torque by decreasing the revolution speed thereof by the arrangement of planetary gear set and to supply the low-speed and high-torque to engine EG, it is possible to made generator/motor MG smaller. Additionally, since first and second clutches A-C/L and C-A/L are coaxially arranged, the axial dimension of transmission unit MGU is suppressed so as to easily installed in the vehicle.

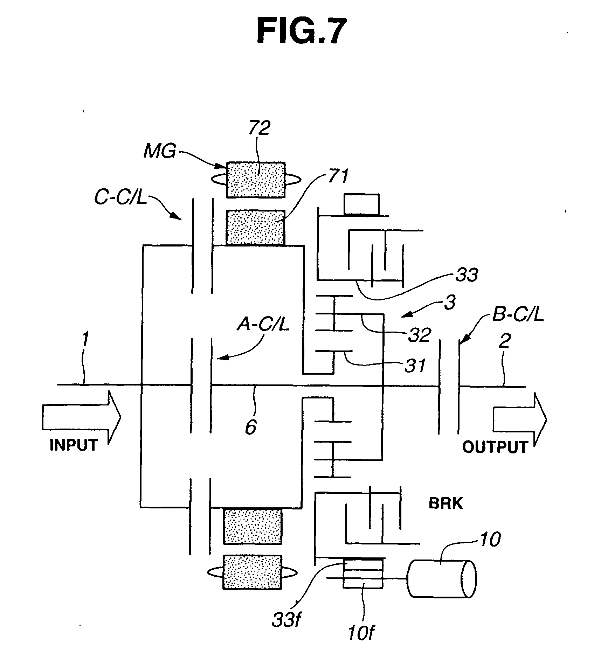

Referring to Fig. 7, there is shown a second embodiment of transmission unit MGU according to the present invention. In explaining the second embodiment, the explanation of the construction and operation as common to those of the first embodiment is omitted herein, and only the different parts will be explained.

The second embodiment is specially arranged such that a brake BRK acting as a restraining means is provided independently from brake motor 10 of rotating ring gear 33. Although the second embodiment has been shown and described such that a multi-plate type clutch is employed as brake BRK, a drum brake may be employed as brake BRK.

Although the first embodiment has been arranged such that brake motor 10 functions as a fixing means of ring gear 33 in addition to a ring-gear rotating means, the second embodiment is arranged such that the fixation of ring gear 33 is executed by brake BRK and that it is not necessary that brake motor 10 executes the fixing of ring gear 33. Therefore, pinion gears 33f and 10f are provided around ring gear 33 and the drive shaft of brake motor 10, respectively so as to transmit the drive torque.

Subsequently, a difference between the control in the second embodiment and the control in the first embodiment will be discussed. In the second embodiment, the controls of first to third clutches A-C/L, B-C/L and C-C/L are the same as those in the first embodiment. The controls of brake motor 10 and brake BRK are different from those of the first embodiment, and will be discussed hereinafter by each vehicle driving condition.

[Engine Start Condition]

When engine EG is started under a low temperature condition, control unit CU executes the engine-start torque increasing control in that brake BRK is set at OFF state and brake motor 10 is inversely rotated to inversely rotate ring gear 33 so as to obtain a large speed reduction ratio.

When engine EG is started under an ordinary temperature condition, control unit CU executes an ordinary engine-start control in that brake BRK is set at ON state and brake motor 10 is set at OFF state to fix ring gear 33 so as to obtain the speed reduction ratio determined by planetary gear set 3.

[Vehicle Start Condition]

When the vehicle starts to run, control unit CU executes the speed-reduction torque-increase control in that brake BRK is set at OFF state and ring gear 33 is inversely rotated by means of brake motor 10, so as to obtain the large speed reduction ratio. Then, control unit CU executes the speed reduction control in that brake BRK is set at ON state and brake motor 10 is stopped, in order to fix the speed reduction ratio at a predetermined value (1/3) determined by planetary gear set 3.

[Acceleration Condition]

When the vehicle is accelerated, brake BRK is set at ON state and brake motor 10 is stopped to fix ring gear 33 so that the engine input is directly transmitted to output shaft 2. When the revolution speed of engine EG becomes high, brake BRK is set at OFF state to put ring gear 33 in a free state. With this setting, sun gear 31 and rotor 71 are set so as not to rotate at high revolution speed.

[Ordinary Traveling Condition]

When the vehicle is traveling, brake BRk is set at OFF state and ring gear 33 is set at a non-limited state so that sun gear 31, carrier 32 and ring gear 33 are rotated equal speed. Further, when the vehicle travels at constant high-speed, the constant high-speed control is executed by rightly rotating the brake motor 10.

[Deceleration and Regeneration Condition]

When the vehicle is decelerated and when the regenerative braking is executed, control unit CU executes the deceleration regenerative-braking control in that brake BRK is set at ON state and brake motor 10 is stopped to fix ring gear 33 so as to executed the regeneration of the driving wheel torque.

On the other hand, when the vehicle is decelerated by the regenerative braking from a constant high-speed traveling condition, control unit CU executes the high-speed deceleration regenerative-braking control in that brake BRK is set at OFF state and brake motor 10 is rightly rotated so as to rotate sun gear 31 at an equal speed. This arrangement suppresses rotor 71 from being rotated at high speed and therefore enables the driving torque to be effectively regenerated.

[Creep Running Condition]

When the creeping of vehicle is executed, a desired speed reduction ratio is obtained by setting brake BRK at OFF state and by inversely rotating brake motor 10. Further, when the vehicle speed is increased, brake BRK is set at ON state, and brake motor 10 is stopped to fix ring gear 33. With this arrangement, the speed reduction ratio is set at 1/3.

[Hill-Hold Condition]

When the hill-hold is executed, brake BRK is set at OFF state and brake motor 10 is inversely rotated so as to control the revolution speed of carrier 32 at 0.

With the thus arranged second embodiment, by controlling brake BRK and brake motor 10 properly, the functions and the advantages gained by the first embodiment are also ensured.

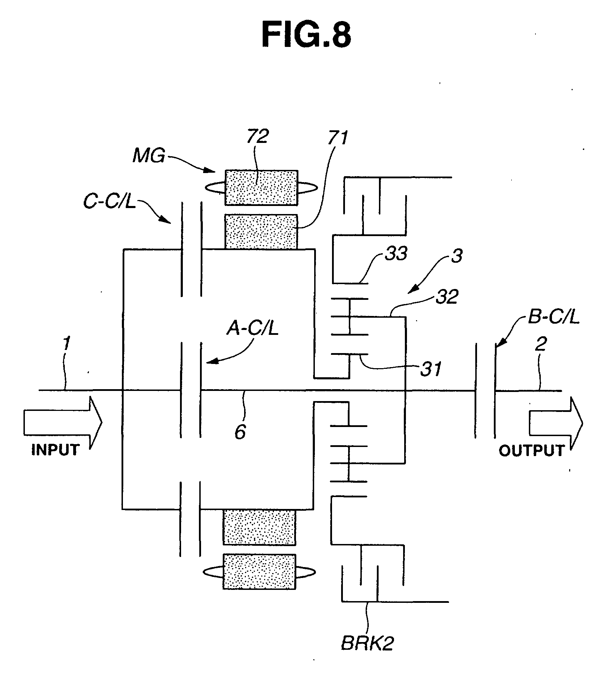

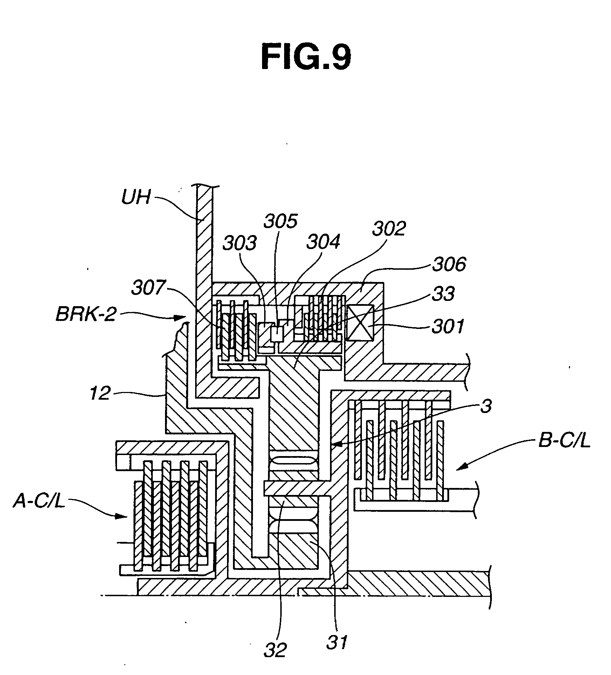

Referring to Figs. 8 and 9, there is shown a third embodiment of transmission unit MGU according to the present invention. In explaining the third embodiment, the explanation of the construction and operation as common to those of the first embodiment is omitted herein, and only the different parts will be explained.

The third embodiment is specifically arranged to employ a second brake BRK2 as a limiting means of ring gear 33 instead of brake motor 10 employed in the second embodiment. Brake motor 10 is not employed in the third embodiment, and second brake BRK2 is arranged to be capable of fixing and unfixing ring gear 33. An electromagnetic pilot brake, a hydraulic brake, a multi-plate brake or a drum brake may be employed as second brake BRK2.

As shown in Fig. 9, second brake BRK2 is of 'an electromagnetic pilot brake and comprises an electromagnetic solenoid 301, a pilot clutch 302, a first ring 303, a second ring 304, a fourth control cam 306 including balls 305, and a multi-plate clutch 307 which is engaged according to the axial movement of first ring 303 which is moved by energizing electromagnet solenoid 301, as is basically the same as the structures of first and third control cams 8 and 16 explained in the first embodiment.

The operation of second brake BRK2 is basically the same as those of electromagnetic solenoid and control cam of the first embodiment, and therefore the explanation thereof is omitted herein.

Subsequently, the characteristic control of the third embodiment will be discussed.

[Engine Starting Condition]

When engine EG is started, control unit CU executes an engine-start control in that second brake BRK2 is set at ON state to fix ring gear 33 regardless the engine temperature (low or ordinary). Therefore, the output torque of generator/motor MG is reduced 1/3 by means of planetary gear set 3 and is then transmitted to engine EG to start engine EG.

[Vehicle Starting Condition]

When the vehicle starts to run, control unit CU executes a speed reduction control in that second brake BRK2 is set at ON state so that the torque of engine EG is reduced 1/3 in speed by planetary gear set 3 and is outputted to output shaft 2. With this setting, high torque is applied to driving wheel so as to smoothly start the vehicle.

[Acceleration or Steady Traveling Condition]

When the vehicle is accelerated or running at a steady speed, first to third clutches A-c/L, B-C/L and C-C/L are engaged, second brake BRK2 is set at OFF state, and ring gear 33 is set at unlimited state. By this setting, sun gear 31, carrier 21 and ring gear 33 are rotated at the same speed, and therefore the driving force of engine EG is transmitted to output shaft 2 at a ratio of 1:1 to execute the steady traveling control.

Further, when the vehicle is accelerated, second brake BRK2 may be set at ON state to increase torque as is similar to the operation in the vehicle starting condition.

[Deceleration and Regeneration Condition]

When the vehicle is decelerated and when the regenerative braking is executed, control unit CU executes the deceleration regenerative-braking control in that first to third clutches A-c/L, B-C/L and C-C/L are engaged, and second brake BRK2 is set at ON state to fix ring gear 33 for increasing the revolution speed of ring gear 31, so as to execute the regeneration of the driving wheel torque by means of generator/motor MG.

On the other hand, when the vehicle is decelerated by the regenerative braking druing a high speed traveling condition, control unit CU executes the high-speed deceleration regenerative-braking control is executed in that second brake BRK2 is set at OFF state for releasing (unfixing) ring gear 33 so as to rotate sun gear 31 at an equal speed. This arrangement suppresses rotor 71 from being rotated at high speed and enables the driving torque to be effectively regenerated by generator/motor MG.

[Creep Running Condition]

When the creeping run of vehicle is executed, control unit CU executes a speed reduction control in that second brake BRK2 is set at ON state to fix ring gear 33. With this setting, the speed reduction ratio is set at 1/3 by planetary gear set 3 so as to increase the torque.

[Hill-Hold Condition]

When the hill-hold is executed, control unit CU executes the speed reduction control in that second brake BRK is set at OFF state to fix ring gear 33. With this setting, the speed reduction ratio is set at 1/3 by planetary gear set 3 so as to increase the torque, as is similar to the creep running of the third embodiment. During this operation, it is preferable to execute an output torque control for keeping the vehicle speed at zero by regenerating the driving torque by means of generator/motor MG.

The entire contents of Japanese Patent Application No. 2001-8839 filed on January 17, 2001 in Japan are incorporated herein by reference.

Although the invention has been described above by reference to certain embodiments of the invention, the invention is not limited to the embodiments described above. Modifications and variations of the embodiments described above will occur to those skilled in the art, in light of the above teaching. The scope of the invention is defined with reference to the following claims. For example, although the embodiments have been shown and described to be adapted to a torque transmission between engine EG and transmission TM of the vehicle, it will be understood that the feature of the present invention may be adapted to a torque transmission of an industrial machine except for automotives. Further, although the embodiments have been shown and described such that second clutch B-C/L is described as a part arranged separately from the assembly part shown in Fig. 3, it will be understood that second clutch B-C/L may be assembled to center shaft 6.

**Claims**

1. A transmission unit comprising:

    a planetary gear set disposed between a drive shaft of a power source and an output shaft, the planetary gear set comprising a sun gear, a carrier and a ring gear;
    a first clutch installed between the carrier and the drive shaft;
    a second clutch installed between the carrier and the output shaft;
    a third clutch installed between the sun gear and the drive shaft; and
    a restraining means that fixes and unfixes the ring gear.

2. The transmission unit as claimed in claim 1, wherein the power source is an internal combustion engine for an automotive vehicle, and the drive shaft receives driving force from the engine, and the output shaft outputs the driving force to a transmission of the automotive vehicle.

**3.** The transmission unit as claimed in claim 1, wherein each of first, second and third clutches comprises a multi-plate clutch, first and second rings, a control cam and a pilot clutch, the second ring being disposed adjacent to the multi-plate clutch and being movable in an axial direction of the transmission unit, the first clutch being rotatable relative to the second ring, the control cam comprising a cam means for putting the multi-plate clutch into an engaged condition by, pushing the multi-plate clutch by means of the axial movement of the second ring according to a relative rotation between the first and second rings, the pilot clutch stopping a rotation of the first ring by receiving attracting force caused by an electromagnetic solenoid.

**4.** The transmission unit as claimed in claim 1, further comprising a generator/motor which comprises a stator which is installed in a housing of the transmission unit and a rotor which rotates integrally with the sun gear, the stator and the rotor being oppositely located.

**5.** The transmission unit as claimed in claim 1, wherein the restraint means is a brake.

**6.** The transmission unit as claimed in claim 1, further comprising a ring gear motor which rotates ring gear rightly and inversely when the restraining means unfixes the ring gear.

**7.** The transmission unit as claimed in claim 6, wherein the ring gear motor functions as restraint means for fixing the ring gear.

**8.** The transmission unit as claimed in claim 6, further comprising a control means for the operating conditions of the first clutch, the second clutch, the third clutch, the generator/motor, and the ring gear, respectively.

**9.** The transmission unit as claimed in claim 8, wherein the control means controls engagement and disengagement of each of first, second and third clutches, the control means changes an operating condition of the generator/motor among an inoperative condition, a motor operating condition and a generator operating condition, and the control means changes a rotational condition of the ring gear among a right rotating condition, an inverse rotating condition and a fixed condition by controlling the restraint means and the ring gear motor.

**10.** The transmission unit as claimed in claim 9, wherein the control means executes an engine start control for using the generator/motor as a starter motor by engaging the third clutch and by setting the ring gear at the fixed condition when the engine is started.

**11.** The transmission unit as claimed in claim 8, wherein the control means executes an engine start control for using the generator/motor as a starter motor by engaging the first clutch and by fixing, the ring gear when the engine is started.

**12.** The transmission unit as claimed in claim 10, wherein the control means executes an engine-start torque-increasing control for inversely rotating the ring gear by means of the ring gear motor when the engine start control is executed.

**13.** The transmission unit as claimed in claim 8, wherein the control means executes a speed reduction control by engaging the second and third clutches, by disengaging the first clutch, and by inversely rotating the ring gear by means of the ring gear motor when the power source is operating.

**14.** The transmission unit as claimed in claim 13, wherein the control means executes a speed-reduction torque-increase control by inversely rotating the ring gear.

**15.** The transmission unit as claimed in claim 8, wherein the control means executes a steady traveling control by engaging the first and second clutches, by disengaging the third clutch and by unfixing the ring gear.

**16.** The transmission unit as claimed in claim 8, wherein the control means executes a steady traveling control by engaging the first, second and third clutches and by unfixing the ring gear.

**17.** The transmission unit as claimed in claim 16, wherein the control means executes a high speed control by rightly rotating the ring gear at a revolution speed as same as the revolution speed of the sun gear.

**18.** The transmission unit as claimed in claim 8, wherein the control means executes a deceleration and regeneration control by using the generator/motor as a generator through the engagement of the second clutch and by setting the ring gear into one of the fixed condition and the unfixed condition.

19. The transmission unit as claimed in claim 8, wherein the control means executes a deceleration and regeneration control by using the generator/motor as a generator through the engagement of the first, second and third clutches, and by unfixing the ring gear.

20. The transmission unit as claimed in claim 17, wherein the control means executes a high-speed deceleration and regeneration control wherein the sun gear is rotated at a revolution speed equal to a revolution speed of the input torque by rightly rotating the ring gear the sun gear.

21. The transmission unit as claimed in claim 8, wherein the control means executes a hill-hold control by engaging the second and third clutches, by disengaging the first clutch, and by using the generator/motor as one of a generator and a motor.

22. The transmission unit as claimed in claim 21, wherein the control means executes a hill-hold control for keeping the vehicle speed at zero by inversely rotating the ring gear to keep a revolution speed of the carrier at zero.

23. A transmission unit coupled to a drive shaft of an internal combustion engine and an input shaft of an automatic transmission of a vehicle, the transmission system comprising:

    a vehicle driving condition detector unit detecting a driving condition of the vehicle;
    a planetary gear set installed between the drive shaft and the input shaft, the planetary gear set comprising a sun gear, a carrier and a ring gear;
    a first clutch installed between the carrier and the drive shaft;
    a second clutch installed between the carrier and the output shaft;
    a third clutch installed between the sun gear and the drive shaft;
    a ring-gear restraining device that fixes and unfixes the ring gear; and
    a controller coupled to the vehicle driving condition detector unit, the first clutch, the second clutch, the third clutch and the ring-gear restraining device, the controller controlling operation states of the first clutch, the second clutch, the third clutch and the ring-gear restraining device, respectively, according to the vehicle driving condition.

24. A transmission unit installed between a drive shaft of an internal combustion engine and an input shaft of an automatic transmission of a vehicle, the transmission unit comprising:

    a planetary gear set installed between the drive shaft of the engine and the input shaft of the automatic transmission, the planetary gear set comprising a sun gear, a carrier meshed with the sun gear, and a ring gear meshed with the carrier;
    a first clutch means for selectively fixing and unfixing a connection between the carrier and the drive shaft;
    a second clutch means for selectively fixing and unfixing a connection between the carrier and the output shaft;
    a third clutch means for selectively fixing and unfixing a connection between the sun gear and the drive shaft; and
    a restraining means for selectively fixing and unfixing a connection between the ring gear and a housing of the transmission unit.

EP 1 225 370 A2

# FIG.1

# FIG.2

# FIG.3

# FIG.4

EP 1 225 370 A2

START

OUT

IGNITION:Ig →
ACCELERATOR OPENING:α →
BRAKE:β →
TM POSITION:Range →
ENGINE SPEED:Ne →
VEHICLE SPEED:Vh →

DRIVING CONDITION DETERMINING CALCULATION

S201 | S202 | S203 | S204 | S205 | S206 | S207 | S208

| ENGINE INITIAL START | ENGINE RESTART | CREEP | HILL HOLD | VEHICLE START ACCELERATION | TRAVELING | DECELERATION | OTHER CONDITION |
|---|---|---|---|---|---|---|---|
| · Ig=OFF<br>· α=0<br>· β=ON<br>· Range=P<br>· Ne=0<br>· Vh=0 | · Ig=ON<br>· α=0<br>· β=OFF<br>· Range=D<br>· Ne=0<br>· Vh=0 | · Ig=ON<br>· α=0<br>· β=OFF<br>· Range=D<br>· Ne ≤ 800<br>· Vh ≤ 4 | · Ig=ON<br>· α=0<br>· β=OFF<br>· Range=D<br>· Ne ≤ 800<br>· 0 ≤ Vh ≤ 4 | · Ig=ON<br>· α > 0<br>· β=OFF<br>· Range=D<br>· Ne ≥ 1000<br>· Vh > 4<br>· dVh/dt > 0 | · Ig=ON<br>· α > 0<br>· β=OFF<br>· Range=D<br>· Ne ≥ 2000<br>· Vh > 40 | · Ig=ON<br>· α=0<br>· β=ON<br>· Range=D<br>· Ne ≥ 1000<br>· Vh > 10<br>· dVh/dt < 0 | |

S209
NO ← $T_w > T_{TH}$ ? → YES

NO ← A-C/L ON ? → YES
S210

S215
$4 > V_h$ ? NO
YES

S211
BRKWAY=LOCK

S212
BRKWAY=CLOCKWISE

S213
BRKWAY=C.CLOCKWISE

BRKWAY CONTROL DETERMINING CALCULATION
IF BRKWAY=LOCK,
STOP MOTOR DRIVE:FIX
Nm0=0
IF BRKWAY=CW, ROTATE MOTOR IN RIGHT DIRECTION:
Nm0=(nwh·Rm)/zw·(ns·Ne+nr·Ne)/(ns+nr)
IF BRKWAY=CCW, ROTATE MOTOR IN INVERSE DIRECTION:
-Nm0=-(nwh·Rm)/zw·(ns+nr)Ne

S214
OUT

Nm0

BRAKE MOTOR DRIVING SECTION
105

RING GEAR REV. SPEED:Nr =WORM WHEEL REV. SPEED:Nwh
33b

WORM GEAR REV. SPEED :Nw
10b

MOTOR SPEED REDUCTION RATIO:Rm

MOTOR SPEED:Nm

10

# FIG.5

# FIG.6

# FIG.7

# FIG.8

# FIG.9